# EUROPEAN PATENT APPLICATION

(11) **EP 1 577 347 A1**
(43) Date of publication of application: **21.09.2005**
(21) Application number: 03814535.5
(22) Date of filing: 05.11.2003
(51) Int. Cl.: C08L 77/12, C08G 69/44

(54) **AMORPHOUS, WHOLLY AROMATIC POLYESTERAMIDE COMPOSITION**

(30) Priority: 27.12.2002 JP 2002380657
(71) Applicant: Polyplastics Co., Ltd., Tokyo 108-8280 (JP)
(72) Inventor: NAKANE, Toshio, Fuji-shi, Shizuoka 416-8533 (JP); YOKOTA, Toshiaki, Fuji-shi, Shizuoka 416-8533 (JP); OHTAKE, Mineo, Fuji-shi, Shizuoka 416-8533 (JP); SHIWAKU, Toshio, Fuji-shi, Shizuoka 416-8533 (JP)
(74) Representative: Peel, James Peter
(86) International application number: PCT/JP2003/014113
(87) International publication number: WO 2004/061000

(57) **Abstract**

The present invention is to provide an amorphous wholly aromatic polyester amide composition which has an excellent stretching property and a good adhesion to a heterogeneous polymer and thereby can be in particular suitably used for a multilayer film, or a multilayer sheet, a multilayer blow formed product and the like. That is, (the first invention) an amorphous wholly aromatic polyester amide composition obtained by blending 1 to 30% by weight of a modified polyolefin resin or a polyamide resin having a melting point of 230°C or lower or being amorphous with an amorphous wholly aromatic polyester amide exhibiting an optical anisotropy at softening and flowing and being a wholly aromatic polyester amide obtained by copolymerizing
(A) 4-hydroxybenzoic acid,
(B) 2-hydroxy-6-naphthoic acid,
(C) an aromatic aminophenol and
(D) an aromatic dicarboxylic acid,
wherein
(1) the ratio of (C) the aromatic aminophenol is from 7 to 35 % by mol,
(2) the ratio of the bending monomer(s) among the starting monomers is from 7 to 35 % by mol,
(3) the ratio ((A)/(B)) between (A) 4-hydroxybenzoic acid and (B) 2-hydroxy-6-naphthoic acid is from 0.15. to 4.0,
(4) the ratio of isophthalic acid is at least 35% by mol in (D) the aromatic dicarboxylic acid,
(5) any melting point is not found by DSC measurement at a temperature rising rate of 20°C /min and
(6) the glass transition temperature is from 100 to 180°C, and
(the second invention) an amorphous wholly aromatic polyester amide composition obtained by blending 1 to 30% by weight of a modified polyolefin resin or a polyamide resin having a melting point of 230°C or lower or being amorphous with an amorphous wholly aromatic polyester amide exhibiting optical anisotropy at softening and flowing and being a wholly aromatic polyester amide obtained by copolymerizing
(A) 4-hydroxybenzoic acid,
(B) 2-hydroxy-6-naphthoic acid,
(C)' an aromatic diamine and
(D) an aromatic dicarboxylic acid,
wherein
(1) the ratio of (C)' the aromatic diamine is from 3 to 15% by mol,
(2) the ratio of the bending monomer(s) is from 7 to 35% by mol in the starting monomers,
(3) the ratio ((A)/(B)) between (A) 4-hydroxybenzoic acid and (B) 2-hydroxy-6-naphthoic acid is from 0.15 to 4.0,
(4) any melting point is not found by DSC measurement at a temperature rising rate of 20°C /min and
(5) the glass transition temperature is from 100 to 180°C.

## Description

### Technical Field of the Invention

The present invention relates to an amorphous wholly aromatic polyester amide composition, which is used for a film, a sheet, blow molded article and the like. More specifically, it relates to an amorphous wholly aromatic polyester amide composition, which is used for a multilayer film or a multilayer sheet, a multilayer blow molded article and the like.

### Technical Background

A liquid crystalline polymer has excellent flowability, mechanical strength, heat resistance, chemical resistance and electric properties in a well-balanced state and, therefore, is suitably and widely used as high performance engineering plastics. Most of them are mainly obtained by injection molding.

According to recent remarkable advance in industry, application of such liquid crystalline polymer is apt to cover a lot of ground, be more leveled up and specified. The liquid crystalline polymer has been expected to be blow molded and processed efficiently and economically, while making good use of its gas transmission resistance, by blow molding or melt stretch forming to provide hollow molded articles, film or sheet, and fiber while keeping its excellent physical properties. For example, among automobile parts, a fuel tank and various pipes are required to be of low gasoline transmission and further high-level mechanical properties, therefore conventionally they are in a field where only products made of metal are used. However, the metal parts are being replaced with plastic ones for the purpose of weight reduction, rustproof and processing cost reduction. Thus, it is desired to obtain them by blow molding of a liquid crystalline polymer having above described excellent properties.

However, although liquid crystalline polymer has excellent flowability and mechanical properties, generally it is low in melt viscosity and tensile strength in a molten state, which are the most important properties for adopting a blow molding method, to make obtaining a molded article in a desired figure by blow molding method almost impossible. As an improved method, a method using a highly polymerized polyester resin having high intrinsic viscosity, a method using a branched polyester resin, and further a method adding various fillers are proposed. But all of the resulted materials show a little improvement effect and they are insufficient as a material for such processing methods.

On the other hand, for the purpose of improving blow moldability and the like, various liquid crystalline polyester amides obtained by copolymerizing amino compound have been proposed (JP-A 57-177019, JP-A 61-239013, JP-A 63-191824, JP-A 5-170902, JP-A 2001-200034). Further, an improvement of moldability by blending various thermoplastic resins with a liquid crystalline polymer has been attempted (JP-A 9-12744).

But it has been found out by the present inventors' additional tests that the liquid crystalline polyester amides as proposed in JP-A 57-177019, JP-A 61-239013, JP-A 63-191824, JP-A 5-170902, JP-A 2001-200034 have a problem that they are sometimes insufficient in stretchability and are unsatisfactory in adhesiveness to a heterogeneous polymer so that they may be substantially impossible to be used particularly for a multi-layer film or a multi-layer sheet, a multi-layer blow molded article and the like, though they have some excellent properties to use for fiber and a blow molded article. Approaches as proposed in JP-A 9-12744 also has problems that blending conditions must be strictly set and that kinds of available thermoplastic resins are substantially limited because of excellent heat resisting properties of the liquid crystalline polymer. For example, use of a resin for alloy to which an reactive group has been introduced results in a problem that a side reaction such as gelation occurs at kneading.

### Disclosure of the Invention

The present inventors made a diligent study to solve the problem and provide a wholly aromatic polyester amide composition having an excellent stretching property and a good adhesion to a heterogeneous polymer while keeping good mechanical properties and, as the result, found out that use of polyester amide of a skeleton in which specific monomers as a starting material monomer were selectively combined and a starting material monomer in which a specific amount of a bending monomer was introduced allowed a melting process temperature to be significantly lowered, and that a composition in which a modified polyolefin resin or polyamide resin having a melting point of 230°C or lower or being amorphous were blended to the polyester amide was effective to achieve the purpose, and completed the invention.

Namely, the present invention is an amorphous wholly aromatic polyester amide composition (hereinafter, referred to as "the first invention of the present application") obtained by blending 1 to 30% by weight of a modified polyolefin resin or polyamide resin having a melting point of 230°C or lower or being amorphous with an amorphous wholly aromatic polyester amide exhibiting an optical anisotropy at softening and flowing and being a wholly aromatic polyester amide obtained by copolymerizing
(A) 4-hydroxybenzoic acid,
(B) 2-hydroxy-6-naphthoic acid,
(C) an aromatic aminophenol and
(D) an aromatic dicarboxylic acid,
wherein
(1) the ratio of (C) the aromatic aminophenol is from 7 to 35% by mol,
(2) the ratio of the bending monomer(s) is from 7 to 35% by mol in the starting monomers,
(3) the ratio ((A)/(B)) between (A) 4-hydroxybenzoic acid and (B) 2-hydroxy-6-naphthoic acid is from 0.15 to 4.0,
(4) the ratio of isophthalic acid is 35% by mol or more in the aromatic dicarboxylic acid,
(5) any melting point is not found by DSC measurement at a temperature rising rate of 20°C /min, and
(6) the glass transition temperature is from 100 to 180°C; and
is an amorphous wholly aromatic polyester amide composition (hereinafter, referred to as "the second invention of the present application") obtained by blending 1 to 30% by weight of a modified polyolefin resin or polyamide resin having a melting point of 230°C or lower or being amorphous with an amorphous wholly aromatic polyester amide exhibiting an optical anisotropy at softening and flowing and being a wholly aromatic polyester amide obtained by copolymerizing
(A) 4-hydroxybenzoic acid,
(B) 2-hydroxy-6-naphthoic acid,
(C)' an aromatic diamine and
(D) an aromatic dicarboxylic acid,
wherein
(1) the ratio of (C)' the aromatic diamine is from 3 to 15 % by mol,
(2) the ratio of the bending monomer(s) is from 7 to 35% by mol in the starting monomers,
(3) the ratio ((A)/(B)) between (A) 4-hydroxybenzoic acid and (B) 2-hydroxy-6-naphthoic acid is from 0.15 to 4.0,
(4) any melting point is not found by DSC measurement at a temperature rising rate of 20°C/min, and
(5) the glass transition temperature is from 100 to 180°C.

### Detailed Description of the Invention

Starting material compounds necessary for producing the wholly aromatic polyester amide used in the invention will be described in detail in due order. First, the first invention of the present application will be described.

A first component as a starting material monomer to be used in the first invention is (A) 4-hydroxybenzoic acid. Its derivatives are also employable. A second component is (B) 2-hydroxy-6-naphthoic acid. Its derivatives are also employable.

A third component as a starting material monomer to be used in the first invention is (C) an aromatic aminophenol including, for example, p-aminophenol, p-N-methylaminophenol, 3-methyl-4-aminophenol, 2-chloro-4-aminophenol and their derivatives.

A fourth component as a starting material monomer to be used in the first invention is (D) an aromatic dicarboxylic acid including, for example, terephthalic acid, isophthalic acid, phthalic acid, 4,4'-diphenyldicarboxylic acid, 2,6-naphthalene dicarboxylic acid, 2,3-naphthalene dicarboxylic acid, methylterephthalic acid, chloroterephthalic acid, and their derivatives.

In the wholly aromatic polyester amide of the first invention obtained by copolymerizing the components (A) - (D), the copolymerization ratio of each component is important for expressing excellent stretching property and good adhesion to a heterogeneous polymer while keeping excellent mechanical properties, which was the desired object of the invention.

More specifically, in the wholly aromatic polyester amide of the first invention, the ratio of (C) an aromatic aminophenol must be 7-35% by mol, and preferably 10-25% by mol. When less than 7% by mol, aimed adhesiveness can not be expressed, and when more than 35% by mol, an amorphous wholly aromatic polyester amide exhibiting optical anisotropy at the softening and flowing can not be obtained. Therefore, the both cases are not preferable.

In the starting material monomers, ratio of the bending monomer must be 7-35% by mol. Here, a bending monomer is a compound, among compounds having a phenylene skeleton, which can bend a molecular chain such as compounds having an ester- or amide-formable functional group (a carboxyl group, a phenol group, an amino group) at meta- or ortho-site. Specifically, a compound having a 1,3-phenylene, a 2,3-phenylene skeleton or a 2,3-naphthalene skeleton may be mentioned.

The bending monomer includes more specifically isophthalic acid, phthalic acid, 2,3-naphthalene dicarboxylic acid and their derivatives. 3,3'-biphenyl dicarboxylic acid, 4,3'-biphenyl dicarboxylic acid and their derivatives are also included in the bending monomer. Isophthalic acid is particularly preferable.

Therefore, as (D) an aromatic dicarboxylic acid of the invention, 35% by mol or more, particularly 100% by mol of the whole aromatic dicarboxylic acid is preferably isophthalic acid.

As a bending monomer, an aromatic hydroxycarboxylic acid such as m-hydroxybenzoic acid and salicylic acid may be introduced at a small amount (at 10% by mol or less) as the monomer other than (A), (B), (C), and (D).

The sum of (A) 4-hydroxybenzoic acid and (B) 2-hydroxy-6-naphthoic acid is generally 30-90% by mol (preferably 50-80% by mol). The ratio of (A) to (B) ((A)/(B)) must be 0.15-4.0, and preferably 0.25-3. When the ratio is outside the range, the polymer crystallizes and has undesirably bad stretching property and adhesiveness.

In the wholly aromatic polyester amide of the first invention, the most desirable copolymerization ratios of (A) - (D) are as follows:
(A) 4-hydroxybenzoic acid; 20-60% by mol
(B) 2-hydroxy-6-naphthoic acid; 20-60% by mol
(C) aromatic aminophenol; 10-25% by mol
(D) aromatic dicarboxylic acid; 10-25% by mol.

The second invention of the present application will be described below.

In a wholly aromatic polyester amide to be used in the second invention of the present application, (A), (B), and (D) components are same in kind and detail as in the first invention of the present application.

Starting materials necessary for forming the amount will be described in detail in due order.

In the second invention of the application, (C)' an aromatic diamine is used as a third component of the starting material monomers, including, for example, 1,3-phenylene diamine, 1,4-phenylene diamine and their derivatives.

In the wholly aromatic polyester amide used in the second invention obtained by copolymerizing the components (A) - (D), the copolymerization ratio of each component is important for expressing excellent adhesion to a heterogeneous polymer while keeping good mechanical properties, which was the desired object of the invention.

That is, in the wholly aromatic polyester amide of the invention, (C)' the aromatic diamine needs to be at a ratio of 3 -15% by mol, and preferably 5-10% by mol. Less than 3% by mol can not allow the aimed adhesiveness to exhibit, and more than 15% by mol cannot obtain the target polymer to make the polymer solidify in the reaction course. None of them are desired.

In the starting material monomers, ratio of the bending monomer must be 7-35% by mol. Here, a bending monomer is a compound, among compounds having a phenylene skeleton, which can bend a molecular chain such as compounds having an ester- or amide-formable functional group (a carboxyl group, a phenol group, an amino group) at meta- or ortho-site. Specifically, a compound having a 1,3-phenylene skeleton, a 2,3-phenylene skeleton or a 2,3-naphthalene skeleton may be mentioned.

The bending monomer includes more specifically isophthalic acid, phthalic acid, 2,3-naphthalene dicarboxylic acid, 1,3-phenylene diamine and their derivatives. 3,3'-biphenyl dicarboxylic acid, 4,3'-biphenyl dicarboxylic acid and their derivatives are also included in the bending monomer. Isophthalic acid is particularly preferable.

Therefore, as (D) an aromatic dicarboxylic acid of the invention, 35% by mol or more, particularly 100% by mol of the whole aromatic dicarboxylic acid is preferably isophthalic acid.

As a bending monomer, an aromatic hydroxycarboxylic acid such as m-hydroxybenzoic acid and salicylic acid may be introduced at a small amount (at 10% by mol or less) as the monomer other than (A), (B), (C), and (D).

The sum of (A) 4-hydroxybenzoic acid and (B) 2-hydroxy-6-naphthoic acid is generally 30-90% by mol (preferably 50-80% by mol). The ratio of (A) to (B) ((A)/(B)) must be 0.15-4.0, and preferably 0.25-3. When the ratio is outside the range, the polymer crystallizes and has undesirably bad moldability and adhesiveness.

For the wholly aromatic polyester amide of the second invention of the application, the most desirable copolymerization ratios are as follows:
(A) 4-hydroxybenzoic acid; 20-60% by mol,
(B) 2-hydroxy-6-naphthoic acid; 20-60% by mol,
(C)' Aromatic diamine; 5-10% by mol,
(D) Aromatic dicarboxylic acid; 10-25% by mol,.and
aromatic diol as an optional component; 0-25 % by mol.

In the second invention of the application, aromatic diol is not indispensable as a starting material monomer, but can be used at 25% by mol or less as a constituent component. Examples of the aromatic diol include 4,4'-biphenol, hydroquinone, didydroxybiphenyl, resorcinol, 2,6-dihydroxynaphthalene, 2,3-dihydroxynaphtalene and derivatives thereof.

The wholly aromatic polyester amide of the invention needs to have no observable melting point by DSC measurement at a temperature rising rate of 20°C /min, to soften around the glass transition temperature and to be substantially amorphous. An amorphous LCP solidify slowly since it does not crystallizes during the cooling process from a molten state, and keeps a molten state to be capable of flowing down to the glass transition temperature. On the contrary, a crystalline polymer undesirably solidifies swiftly. The fact that the wholly aromatic polyester amide of the invention is substantially amorphous is an important property for obtaining a good processability in blow molding and film production.

Further, the wholly aromatic polyester amide of the invention must have a glass transition temperature in the range of 100-180 °C. The glass transition temperature of lower than 100 °C undesirably worsens heat resistance, and that of higher than 180 °C undesirably worsens stretching property and adhesiveness.

Other generally known constituent units may also be introduced to the polyester amide of the invention at a small amount in a range of not impairing the object of the invention, but preferably are virtually not contained.

The wholly aromatic polyester amide of the invention is polymerized by a direct polymerization method or an ester exchange method and upon polymerization, a melt polymerization method, a solution polymerization method or a slurry polymerization method and the like is employed.

In the invention, an acylation agent for a polymerizing monomer or a terminal-activated monomer as an acid chloride derivative is employed upon polymerization. The acylation agent includes an acid anhydride such as acetic anhydride, and the like. The amount to be used is preferably 1.01-1.10 times, and more preferably 1.02-1.05 times the total equivalent of amino groups and hydroxyl groups from the viewpoint of polymerization control.

Various catalysts can be employed for the polymerization. Typically dialkyl tin oxide, diaryl tin oxide, titanium dioxide, alkoxy titanium silicates, titanium alcoholates, alkali or alkali earth metal carboxylates, and a Lewis acid such as BF₃. are mentioned. The amount of the catalyst to be used is generally about 0.001-1% by weight, and preferably 0.003-0.2% by weight based on the total amount of the monomers.

When the solution polymerization or slurry polymerization is conducted, liquid paraffin, a highly heat resistant synthetic oil, or an inactive mineral oil is employed as a solvent.

As for the reaction conditions, the reaction temperature is 200-380 °C, and the final pressure is 0.1-760 Torr (namely 13-101,080 Pa). Particularly for the melt reaction, the reaction temperature is 260-380 °C and preferably 300-360 °C, and the final pressure is 1-100 Torr (namely 133-13,300 Pa) and preferably 1-50 Torr (namely 133-6,670 Pa).

The melt polymerization is carried out, by starting pressure reduction after the reaction system reaches a prescribed temperature, at a prescribed degree of pressure reduction. After a stirrer torque arrives at a prescribed value, an inert gas is introduced and, from a state of reduced pressure via a normal pressure, the reaction system is adjusted to a prescribed pressurized state, and the polymer is discharged.

The fact that the liquid crystalline polymer exhibits optical anisotropy in a molten state is an indispensable element for having both heat stability and easy processability in the invention. Although some of the wholly aromatic polyester amides constituted of the above described units do not form an anisotropic melt phase depending on constituents and a sequence distribution in the polymer, the polymer according to the invention is limited to wholly aromatic polyester amides exhibiting optical anisotropy when they melt.

Melt-anisotropic property can be confirmed by a conventional polarimetric inspection method using crossed polarizers. More specifically, the confirmation of melt-anisotropic property is conducted by melting a sample on a hot stage made by Lincome and observing it by using a polarizing microscope made by Olympus at x150 magnification in a nitrogen atmosphere. The polymer is optically anisotropic and allows light to transmit when it is inserted between crossed polarizers. In the case where a sample is anisotropic, polarized light can transmit even when the sample is, for example, in a molten and stationary liquid.

As an index for the processability in the invention, liquid crystallinity and glass transition temperature may be considered. Whether the liquid crystallinity is exhibited or not deeply involves in the flowability in the molten state. The polyester amide of the present application indispensably exhibits liquid crystallinity in a molten state.

Generally, a nematic liquid crystalline polymer exhibits liquid crystallinity at a temperature of the melting point or higher and, after being subjected to various molding processes and then cooled down to the crystallization temperature or lower, is solidified in the shape of a molded article. However, since the amorphous polyester amide of the invention does not crystallize, the flowability thereof is kept until the temperature of the resin reaches near the glass transition temperature. Thus the resin may be a suitable material for extrusion processing such as film, sheet and blow molding. Consequently, the glass transition temperature is preferably 100 °C or higher from the viewpoint of the heat resistance of a molded article and the promotion of efficiency of a process for drying the resin pellet. But a glass transition temperature of higher than 180 °C is undesirable because adhesion of the polyester amide composition to another resin deteriorates in multilayer blowing and the like.

Furthermore, the melt viscosity at a shear rate of 1,000 sec⁻¹ is preferably 1×10⁶Pa S or less, and more preferably 1×10³Pa·S or less at a temperature higher than the glass transition temperature by 80-120 °C. This melt viscosity can be generally achieved by equipping liquid crystallinity.

Next, the modified polyolefin resins to be used in the invention will be described. The modified polyolefin resins usable in the invention have a main chain skeleton such as a high pressure-processed polyethylene, a moderate or low pressure-processed polyethylene, a gas-phase processed ethylene-α-olefin copolymer, LLDPE, polypropylene, polybutene, an ethylene-propylene copolymer, an ethylene-methyl acrylate copolymer, an ethylene-methyl methacrylate copolymer, an ethylene-ethyl methacrylate copolymer, and an ethylene-propylene-diene terpolymer, to a part of which a polar group and/or a reactive group such as a carboxyl group, an acid anhydride group and an epoxy group are introduced.

The preferable main chain skeleton of the modified polyolefin resins is an elastomer mainly composed of ethylene and/or propylene, and concretely includes, but is not limited to, ethylene, an ethylene-propylene copolymer, an ethylene-1-butene copolymer, an ethylene-propylene-1-butene terpolymer, an ethylene-propylene-diene terpolymer, an ethylene-ethyl acrylate copolymer, an ethylene-glycidyl methacrylate copolymer, and an ethylene-glycidyl methacrylate-vinyl acetate terpolymer.

As a method for introducing a polar group and/or a reactive group, the method can be mentioned in which a polyolefin resin and one or more compounds selected from the group consisting of an unsaturated carboxylic acid, its anhydride, and their derivatives are heated in a solution or molten state with a suitable radical initiator such as an organic peroxide to be reacted, or an α-olefin is copolymerized as a component unit.

The unsaturated carboxylic acid, its anhydride, and their derivatives to be used here include an unsaturated carboxylic acid such as acrylic acid, methacrylic acid, maleic acid, citraconic acid, itaconic acid, tetrahydrophthalic acid, nadic acid, methyl nadic acid, allylphthalic acid, an unsaturated carboxylic acid anhydride such as maleic anhydride, citraconic anhydride, itaconic anhydride, tetrahydrophthalic anhydride, nadic anhydride, methylnadic anhydride, and allylphthalic anhydride and their derivatives.

The preferable α-olefin component unit is a compound having a carbon double bond and an epoxy copolymer in the molecule, including allyl glycidyl ether, glycidyl acrylate, glycidyl methacylate, vinylbenzoic acid glycidyl ester, allylbenzoic acid glycidyl ester, N-diallylaminoepoxy propane, cinnamic acid glycidyl ester, cinnamylideneacetic acid glycidyl ester, chalcone glycidyl ether, epoxy hexene, dimeric acid glycidyl ester, and the ester of an epoxylated stearyl alcohol with acrylic acid or methacrylic acid.

As a preferable modified polyolefin resin to be blended to the wholly aromatic polyester amide in view of their dispersibility and adhesiveness to the wholly aromatic polyester amide is that obtained by grafting an unsaturated carboxylic acid and/or its derivatives and a modified polyolefin resin to which a compound having an epoxy group is introduced

The example of the former is an acid anhydride-modified polyolefin resin obtained by modifying a polyolefin resin with an acid anhydride. The polyolefin resin to be used here includes a homopolymer of an α-olefin such as ethylene, propylene, butene, hexene, octene, nonene, decene, and dodecene, a random, block or graft copolymer comprising two or more of these olefins, or a random, block or graft copolymer thereof comprising one or more comonomer components such as a nonconjugated diene compound including 1,4-hexadiene, dicyclopentadiene, 5-ethylidene-2-norbornene and 2,5-norbonadiene, a conjugated diene compound including butadiene, isoprene, and piperylene, an α,β-unsaturated acid or its derivative like an ester including vinyl acetate, acrylic acid and methacrylic acid, an aromatic vinyl compound including acrylonitrile, styrene and α-methylstyrene, or a vinyl ester including vinyl acetate, a vinyl ether including vinyl methyl ether and a derivative of these vinyl-based compounds. The degree of polymerization, the existence or absence or degree of a side or branched chain, and the constituent ratio in copolymerization are not limited. The acid anhydride to be used for modification includes one or more selected from unsaturated carbonic acids such as maleic anhydride, citraconic anhydride, itaconic anhydride, tetrahydrophthalic anhydride, nadic anhydride, methylnadic anhydride, and allylphthalic anhydride, and their derivatives. As a method for modification, the method is preferable such that an polyolefin resin and an unsaturated carboxylic acid such as maleic anhydride or its derivative are heated in a solution or molten state with a suitable radical initiator such as an organic peroxide to be reacted. But the method is not limited particularly. The amount of the unsaturated carboxylic acid and/or its derivative for grafting is preferably 0.001-10 parts by weight relative to 100 parts by weight of the polyolefin resin. Less than 0.001 parts by weight is little effective for dispersability and adhesiveness to the wholly aromatic polyester amide, and more than 10 parts by weight undesirably forms easily a gelated product in a melt extrusion process. A grafted polyolefin resin produced by a publicly known graft polymerization method can be used, and a high density-grafted polyolefin resin diluted with a graft-free polyolefin also can be used. A product available in the market, for example, "Admer", "N-Tafmer" (made by Mitsui Chemical) and "Modic" (made by Mitsubishi Chemical) also can be used as the grafted polyolefin.

The example of the latter, that is, the modified polyolefin resin to which a compound having an epoxy group has been introduced is a polymer obtained by (co-) polymerizing a monomer having a vinyl group and an epoxy group such as allyl glycidyl ether, glycidyl methacrylate, and glycidyl acrylate, and among them, a glycidyl group-containing acryl polymer such as an ethylene-glycidyl methacrylate copolymer, an ethylene-glycidyl methacrylate-vinyl acetate copolymer, and an epoxy-modified acrylic rubber can be mentioned. An epoxy group-containing olefin polymer obtained by epoxydating a double bond of an unsaturated polymer with peracid and the like also can be used. The unsaturated polymer which can be epoxydated includes, for example, polybutadiene, polyisoprene, an ethylene-propylene-diene copolymer and a natural rubber. Among them, an ethylene-glycidyl methacrylate copolymer, an ethylene-glycidyl methacrylate-vinyl acetate copolymer, an epoxy-modified acrylic rubber and an epoxydated polybutadiene are particularly preferable.

The polyamide resin to be used in the present invention will be described next. As a polyamide resin, the polyamide resin having a melting point of 230°C or lower or being amorphous is preferable and can be generally obtained by polycondensating a dicarboxylic acid and a diamine, or ring-opening polymerizing a lactam. Nylon 12, Nylon 11, Nylon 610, Nylon 612, Nylon 1010, and Nylon 1012 are preferably used, and a copolymer Nylon containing one of them or Nylon 6, Nylon 46 or Nylon 66 as a constituent monomer unit also are preferably used. Particularly preferable resins are Nylon 11 and Nylon 12.

The Nylon resin is available in the market as a product such as "Rilsan" (made by Atofina) and "Daiamid" (made by Daicel-Degussa).

The modified polyolefin resin, or the polyamide resin having a melting point of 230°C or lower or being amorphous is used at 1-30% by weight, and preferably at 3-20% by weight relative to the wholly aromatic polyester amide.

Next, various fibrous, granular, powdery or plate-like inorganic or organic fillers may be added to the polyester amide of the invention depending on intended purposes.

As a fibrous filler, inorganic fibrous material can be mentioned, including glass fiber, asbestos fiber, silica fiber, silica-alumina fiber, alumina fiber, zirconia fiber, boron nitride fiber, silicon nitride fiber, boron fiber, potassium titanate fiber, fiber of silicate such as wollastonite, magnesium sulfate fiber, aluminum borate fiber, and a fibrous substance of metal such as stainless, aluminum, titan, copper and brass. The particularly representative fibrous filler is glass fiber. A high melting point organic fibrous substance such as polyamide, fluorocarbon resin, polyester resin, and acrylic resin may be employed.

Examples of the granular or powdery filler include carbon black, graphite, silica, powdery quartz, glass bead, milled glass fiber, glass balloon, powdery glass, silicate such as calcium silicate, aluminum silicate, kaolin, clay, diatomite and wollastonite, metal oxide such as iron oxide, titanium oxide, zinc oxide, antimony trioxide and alumina, metal carbonate such as calcium carbonate and magnesium carbonate, metal sulfate such as calcium sulfate and barium sulfate, ferrite, silicon carbide, silicon nitride, boron nitride, and various metal powders.

The plate-like filler includes mica, glass flake, talc, and various metallic foils and the like.

Examples of the organic filler include a heat resistant high strength synthetic fiber such as an aromatic polyester fiber, a liquid crystalline polymer fiber, an aromatic polyamide, and a polyimide fiber, and the like.

Each of these inorganic and organic fillers may be employed alone or by combining two or more of them. The combination of the fibrous filler and the granular or plate-like filler is particularly preferable for simultaneous possession of mechanical strength, dimensional accuracy, electric performance and the like. The amount of the inorganic filler to be compounded is 120 parts by weight or less, and preferably 20-80 parts by weight relative to 100 parts by weight of the wholly aromatic polyester amide.

When the filler is used, a sizing agent or a surface treating agent may be employed if necessary.

Other thermoplastic resins further may be subsidiarily added to the polyester amide of the invention in a range of not impairing the purpose intended by the invention.

Examples of the thermoplastic resin usable in this case include polyolefin such as polyethylene and polypropylene, aromatic polyester consisted of an aromatic dicarboxylic acid and a diol and the like such as polyethylene terephthalate and polybutylene terephthalate, polyacetal (homo or copolymer), polystyrene, polyvinyl chloride, polycarbonate, ABS, polyphenylene oxide, polyphenylene sulfide, and fluorocarbon resin. Each of these thermoplastic resins may be employed in combination of the two or more.

As for producing the resin composition of the invention, a method can be mentioned in which the wholly aromatic polyester amide, the modified polyolefin resin or the polyamide resin, and various components such as an organic or inorganic filler to be used if necessary are simultaneously molten and kneaded by an extruder. The melt temperature for melting and kneading is preferably 180-270°C from the viewpoint of dispersion, inhibition of decomposition of the modified polyolefin resin and the like. The kneading may be performed by using a masterbatch in which one of the components has been molten and kneaded in advance. The resin composition obtained by melting and kneading is cut into pellets by a pelletizer in order to be molded. Any molding method such as, injection molding, extrusion molding or blow molding can be used.

The resin composition of the invention can be used suitably for fiber, film or sheet, or blow molded articles.

When these film, sheet and blow molded articles are processed, film production, blow molding and the like are preferably carried out at a processing temperature of 180-270°C from the viewpoint of inhibiting decomposition and preventing gelation of the modified polyolefin resin.

The composition of a wholly aromatic polyester amide resin obtained by the present invention, which is composed of specific structural units and exhibits anisotropy at the melt state, is melted to have a high viscosity enough to facilitate blow molding and melt stretch processing, and enable to provide a blow molded article (particularly, automobile parts such as a fuel tank), film or sheet and fiber keeping excellent properties of the liquid crystalline polyester amide by an efficient and economical process.

Due to the characteristics of excellent stretchability and good adhesiveness to a heterogeneous polymer, the composition is suitably used for a multilayer film or a multilayer sheet produced in combination with other polymers, and multilayer blow molded articles produced in combination with other polymers. The other polymers to be used herein are not limited to specific ones. Polyolefin, and particularly high density polyethylene is suitable.

### Examples

The invention will be described below in more detail with reference to Examples, but shall not be limited in scope by them. Methods for measuring physical properties in the Examples are as follows:

### [Melting point and glass transition temperature]

These were measured at a temperature rising rate of 20°C /min by a differential scanning calorimeter (DSC7; made by Perkin-Elmer).

### [Melt viscosity]

This was measured at 250°C and at a shear rate of 1,000sec⁻¹ by a Capillograph made by Toyo Seiki using an orifice of 1mm in inner diameter and 20mm in length.

### [Adhesive strength]

After a hot plate welding was conducted by using a 100µm sheet of the Admer NF731 made by Mitsui Chemicals as an adherent at 220°C, a peeling test piece of 15mm in width was cut out and the maximum peeling strength was measured.

### Production Example 1 (Production of Liquid crystalline polymer (a))

Starting material monomers as below, a metal catalyst at an amount of 30ppm based on K⁺ relative to a resultant resin and an acylation agent at an amount of 1.02 times the summed equivalent of the amino group and the hydroxyl group were charged in a polymerization vessel equipped with a stirrer, a reflux column, a monomer charge port, a nitrogen introducing port, and a depressurization/fluxion line, and nitrogen substitution was started.
(A) 4-hydroxybenzoic acid: 59.22g (20% by mol)
(B) 2-hydroxy-6-naphthoic acid: 161.38g (40% by mol)
(C) Acetoxy-4-aminophenol: 71.23g (20% by mol)
(D) Isophthalic acid: 64.81g (20% by mol.)
Potassium acetate catalyst: 22.5mg
Acetic anhydride: 178.6g

After charging the starting materials, temperature of the reaction system was raised to 140°C to react at 140°C for 1 hour. Then, the temperature was further raised up to 330°C by spending 3.3 hours. From that point, pressure was decreased to 10Torr (namely 1330Pa) by spending 20min and, while distilling acetic acid, excess acetic anhydride and other low boiling point materials, melt polymerization was conducted. After the stirring torque arrived at a prescribed value, nitrogen was introduced to turn from a depressurized state to a pressurized state via a normal pressure, and then polymer was discharged from the bottom of the polymerization vessel.

The liquid crystalline polymer (a) thus obtained exhibited no melting point, had a glass transition temperature of 150.6°C, and had a melt viscosity of 321.3 Pa· s.

### Production Example 2 (Production of Liquid crystalline polymer (b))

Polymerization was carried out as in Production Example 1, except that the charge amount of starting material monomers were determined as follows:
(A) 4-hydroxybenzoic acid: 122.8g (40% by mol)
(B) 2-hydroxy-6-naphthoic acid: 125.48g (30% by mol)
(C) Acetoxy-4-aminophenol: 55.39g (15% by mol)
(D) Isophthalic acid: 50.39g (15% by mol.)
Potassium acetate catalyst: 22.5mg
Acetic anhydride: 196.7g

The liquid crystalline polymer (b) thus obtained exhibited no melting point, had a glass transition temperature of 136.4°C, and had a melt viscosity of 173.1 Pa· s.

### Production Example 3 (Production of Liquid crystalline polymer (c))

Polymerization was carried out as in Production Example 1, except that the charge amount of starting material monomers were determined as follows:
(A) 4-hydroxybenzoic acid: 82.69g (30% by mol)
(B) 2-hydroxy-6-naphthoic acid: 112.65g (30% by mol)
(D) Isophthalic acid: 66.3g (20% by mol.)
4,4'-biphenol: 74.31g (20% by mol.)
Potassium acetate catalyst: 22.5mg
Acetic anhydride: 207.8g

The liquid crystalline polymer (c) thus obtained as a comparative product exhibited no melting point, had a glass transition temperature of 129.4°C, and had a melt viscosity of 169 Pa· s.

### Production Example 4 (Production of Liquid crystalline polymer (d))

Polymerization was carried out as in Production Example 1, except that the charge amount of starting material monomers were determined as follows:
(A) 4-hydroxybenzoic acid: 101g (35% by mol)
(B) 2-hydroxy-6-naphthoic acid: 138g (35% by mol)
(C) 1,3-phenylene diamine: 17g (7.5% by mol)
(D) Isophthalic acid: 52g (15% by mol.)
4,4'-biphenol 29g (7.5% by mol.)
Potassium acetate catalyst: 22.5mg
Acetic anhydride: 218.2g

The liquid crystalline polymer (d) thus obtained exhibited no melting point, had a glass transition temperature of 145°C, and had a melt viscosity of 447 Pa· s.

### Examples 1-11, Comparative examples 1-3

As shown in Table 1, the liquid crystalline polymers as produced above and various modified polyolefin resins were dry blended at the ratio as shown in Table 1, and then were molten and kneaded by using a twin-extruder (PCM30, made by Ikegai Tekko KK) at a cylinder temperature of 230°C, at an extrusion rate of 8 kg/hr, and at a rotation number of 150rpm to make pellets.

Then, a Laboplast mill made by Toyo Seiki was amounted with a 25mmφ die, and a inflation film was prepared at a resin temperature of 230°C and at a die temperature of 230°C. On this occasion, while adjusting a resin extrusion volume, a drawing-in speed and a blower wind volume, the maximum blow-up ratio was searched within a region allowing a stable membrane making to be an index for the film formability.

Further, the Laboplast mill made by Toyo Seiki was amounted with a T die of 100mm in width. The resin composition at 230°C was extruded on a cooling roll at 30°C to melt-molding a 0.10mm thick sheet by adjusting an extrusion rate. The sheet was used as a sample for evaluating the adhesiveness as described above.

The results are shown in Table 1.

### Examples 12-21, Comparative example 4

As shown in Table 2, the liquid crystalline polymers as produced above and various polyamide resins were dry blended at the ratio as shown in Table 1, and then were molten and kneaded by using a twin-extruder (PCM30, made by Ikegai Tekko KK) at a cylinder temperature of 230°C, at an extrusion rate of 8 kg/hr, and at a rotation number of 150rpm to make pellets.

Then, the Laboplast mill made by Toyo Seiki was amounted with a 25mmφ die, and a inflation film was prepared at an extrusion processing temperature (a resin temperature and a die temperature) as shown in Table 2. On this occasion, while adjusting a resin extrusion volume, a drawing-in speed and a blower wind volume, the maximum blow-up ratio was searched within a region allowing a stable membrane making to be an index for the film formability.

Further, the Laboplast mill made by Toyo Seiki was amounted with a T die of 100mm in width. The resin composition at 230°C was extruded on a cooling roll at 30°C to melt-molding a 0.10mm thick sheet by adjusting an extrusion rate. The sheet was used as a sample for evaluating the adhesiveness as described above.

The results are shown in Table 2.

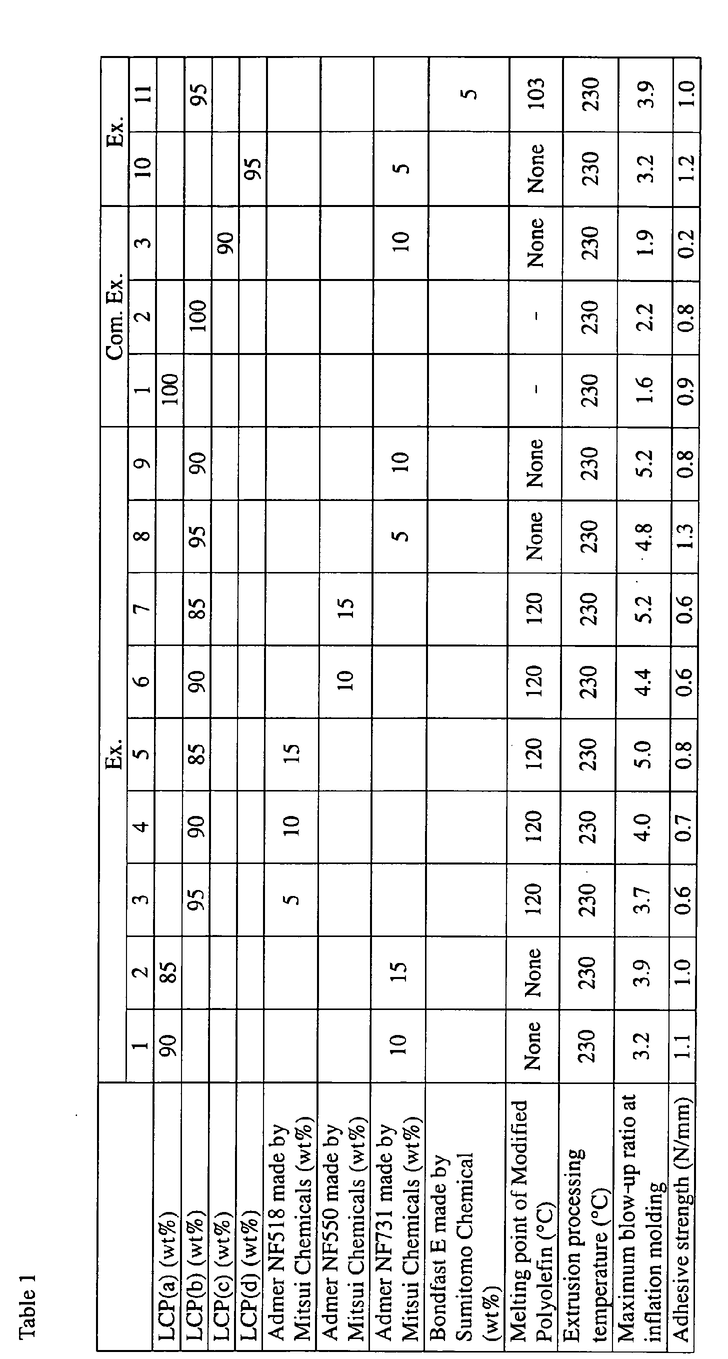

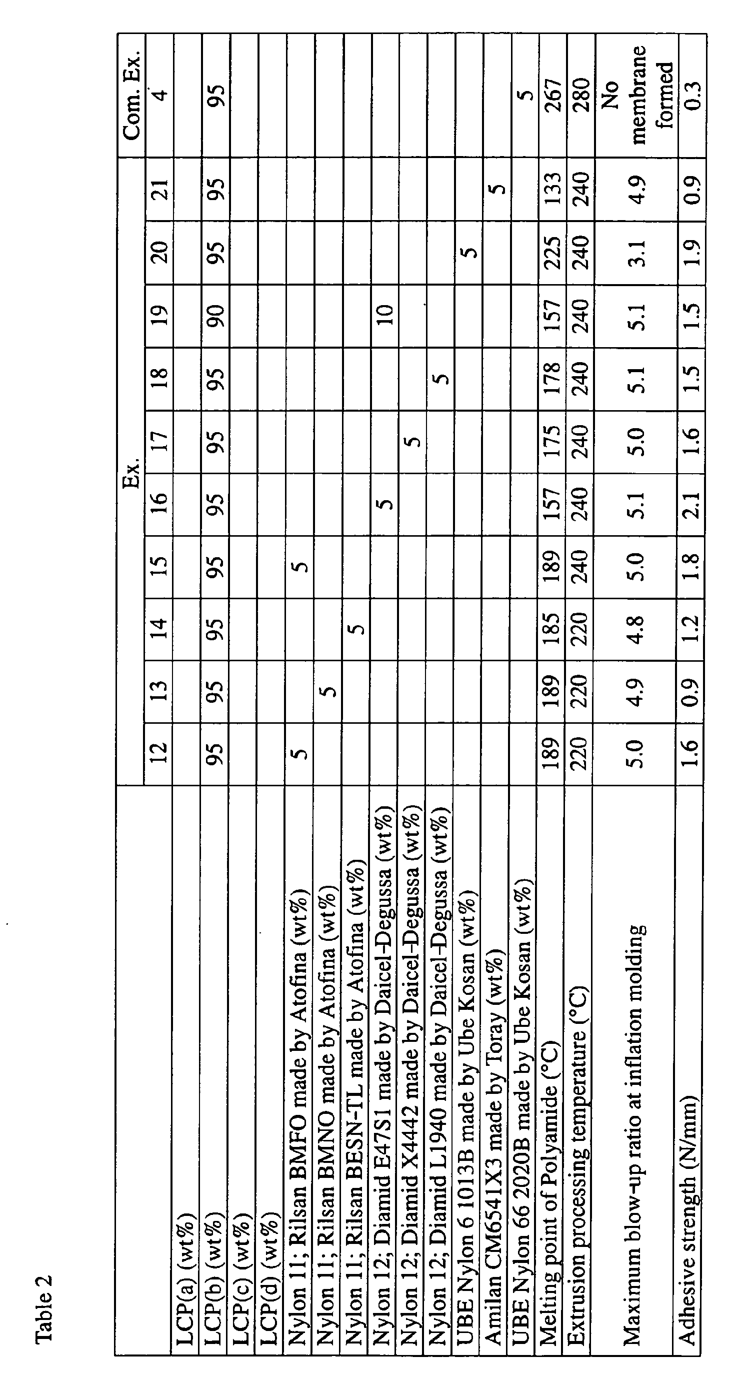

## Claims

1. An amorphous wholly aromatic polyester amide composition obtained by blending 1 to 30% by weight of a modified polyolefin resin or a polyamide resin having a melting point of 230°C or lower or being amorphous with an amorphous wholly aromatic polyester amide exhibiting an optical anisotropy at softening and flowing and being a wholly aromatic polyester amide obtained by copolymerizing
(A) 4-hydroxybenzoic acid,
(B) 2-hydroxy-6-naphthoic acid,
(C) an aromatic aminophenol and
(D) an aromatic dicarboxylic acid,
wherein
(1) the ratio of (C) the aromatic aminophenol is from 7 to 35% by mol,
(2) the ratio of the bending monomer(s) is from 7 to 35% by mol in the starting monomers,
(3) the ratio ((A)/(B)) between (A) 4-hydroxybenzoic acid and (B) 2-hydroxy-6-naphthoic acid is from 0.15 to 4.0,
(4) the ratio of isophthalic acid is at least 35% by mol in (D) the aromatic dicarboxylic acid,
(5) any melting point is not found by DSC measurement at a temperature rising rate of 20°C /min and
(6) the glass transition temperature is from 100 to 180°C.

2. The amorphous wholly aromatic polyester amide composition as claimed in claim 1, wherein the bending monomer is at least one monomer selected from monomers having a 1,3-phenylene skeleton, a 2,3-phenylene skeleton or a 2,3-naphthalene skeleton.

3. The amorphous wholly aromatic polyester amide composition as claimed in claim 1, wherein the bending monomer is at least one monomer selected from isophthalic acid, phthalic acid, 2,3-naphthalene dicarboxylic acid and derivatives thereof.

4. The amorphous wholly aromatic polyester amide composition as claimed in claim 1, wherein the bending monomer is isophthalic acid.

5. The amorphous wholly aromatic polyester amide composition as claimed in any one of claims 1 to 4, wherein (C) the aromatic aminophenol is p-aminophenol.

6. An amorphous wholly aromatic polyester amide composition obtained by blending 1 to 30% by weight of a modified polyolefin resin or a polyamide resin having a melting point of 230°C or lower or being amorphous with an amorphous wholly aromatic polyester amide exhibiting an optical anisotropy at softening and flowing and being a wholly aromatic polyester amide obtained by copolymerizing
(A) 4-hydroxybenzoic acid,
(B) 2-hydroxy-6-naphthoic acid,
(C)' an aromatic diamine and
(D) an aromatic dicarboxylic acid,
wherein
(1) the ratio of (C)' the aromatic diamine is from 3 to 15% by mol,
(2) the ratio of the bending monomer(s) is from 7 to 35% by mol in the starting monomers,
(3) the ratio ((A)/(B)) between (A) 4-hydroxybenzoic acid and (B) 2-hydroxy-6-naphthoic acid is from 0.15 to 4.0,
(4) any melting point is not found by DSC measurement at a temperature rising rate of 20°C /min and
(5) the glass transition temperature is from 100 to 180°C.

7. The amorphous wholly aromatic polyester amide composition as claimed in claim 6, wherein the ratio of isophthalic acid is 35% by mol or more in (D) the aromatic dicarboxylic acid.

8. The amorphous wholly aromatic polyester amide composition as claimed in claim 6, wherein the bending monomer is at least one monomer selected from the monomer having a 1,3-phenylene skeleton, a 2,3-phenylene skeleton or a 2,3-naphthalene skeleton.

9. The amorphous wholly aromatic polyester amide composition as claimed in claim 6, wherein the bending monomer is at least one monomer selected from isophthalic acid, phthalic acid, 2,3-naphthalene dicarboxylic acid, 1,3-phenylenediamine and derivatives thereof.

10. The amorphous wholly aromatic polyester amide composition as claimed in claim 6, wherein the bending monomer is isophthalic acid.

11. The amorphous wholly aromatic polyester amide composition as claimed in any one of claims 6 to 10, wherein (C)' the aromatic diamine is 1,3-phenylenediamine.

12. The amorphous wholly aromatic polyester amide composition as claimed in any one of claims 1 to 11, wherein the modified polyolefin resin is an acid-modified polyolefin resin.

13. A method for manufacturing the amorphous wholly aromatic polyester amide composition as claimed in any one of claims 1 to 12, by kneading the amorphous wholly aromatic polyester amide and the modified polyolefin resin at a melting temperature of 180 to 270°C.

14. An extrusion molded article formed from the amorphous wholly aromatic polyester amide composition as claimed in any one of claims 1 to 12.

15. A fiber or tube formed from the amorphous wholly aromatic polyester amide composition as claimed in any one of claims 1 to 12.

16. Film or sheet formed from the amorphous wholly aromatic polyester amide composition as claimed in any one of claims 1 to 12.

17. A multilayer film or multilayer sheet formed from the amorphous wholly aromatic polyester amide composition as claimed in any one of claims 1 to 12 and another polymer.

18. The multilayer film or multilayer sheet as claimed in claim 17, wherein the another polymer is polyolefin.

19. A method for manufacturing the film or sheet as claimed in any one of claims 16 to 18, by producing the film at a working temperature of 180 to 270°C.

20. A blow molded article formed from the amorphous wholly aromatic polyester amide composition as claimed in any one of claims 1 to 12.

21. A multilayer blow molded article formed from the amorphous wholly aromatic polyester amide composition as claimed in any one of claims 1 to 12 and another polymer.

22. The multilayer blow molded article as claimed in claim 21, wherein the another polymer is polyolefin.

23. The multilayer blow molded article as claimed in claim 22, wherein the polyolefin is a high density polyethylene.

24. The blow molded article as claimed in any one of claims 20 to 23, wherein the blow molded article is a fuel tank.

25. A method for manufacturing the blow molded article as claimed in any one of claims 20 to 24, by performing molding at a working temperature of 180 to 270°C.
